# EUROPEAN PATENT SPECIFICATION

(11) **EP 0 645 000 B1**
(45) Date of publication and mention of the grant of the patent: **12.03.1997**
(21) Application number: 93913743.6
(22) Date of filing: 09.06.1993
(51) Int. Cl.: G01G 19/04

(54) **WEIGHING DEVICE FOR RAIL MOUNTED VEHICLES**
WÄGEVORRICHTUNG FÜR SCHIENENFAHRZEUGE
DISPOSITIF DE PESAGE POUR VEHICULES MONTES SUR RAILS

(30) Priority: 12.06.1992 SE 9201819
(43) Date of publication of application: 29.03.1995
(73) Proprietor: FRONTEC PAJALA AB, S-984 32 Pajala (SE)
(72) Inventor: HOLM, Lauri, S-181 47 Lidingö (SE)
(74) Representative: Henningsson, Gunnar
(86) International application number: SE9300514
(87) International publication number: WO9325872

(56) References cited:
- EP-A- 0 468 397
- DE-A- 2 300 337

## Description

### Technical Field

The present invention relates to a device for the weighing of a vehicle which runs on a track, i.e. a rail vehicle such as a goods wagon. The invention relates in particular to a device enabling dynamic weighing.

### Background Art

There has long been a substantial need for devices enabling the weighing of rail vehicles such as goods wagons with the necessary accuracy, especially in connection with industrial consignments and marshalling. As will be appreciated without further elaboration, it is preferable to be able to weigh dynamically, i.e. while the rail vehicle is in motion on a railway or other track.

There have been attempts to construct weighing devices for the above field of application but the resulting constructions have been very complex, expensive and required extensive installation work, usually without providing the desired accuracy at least in relation to dynamic weighing.

A weighing device according to the pre-characterising part of claim 1 is known from EP-A-0 468 397.

### Objects of the Invention

The objects of the present invention are to provide a weighing device which is simple, easy to install without substantial interference with the rail system, preferably very cheap and which provides accurate weighing results, even on a rail vehicle passing over the device at a relatively high velocity.

### Summary of the Invention

The above objects are attained in a device which exhibits the features defined in the accompanying claim 1.

The device of the invention is thus based upon the insight that load cells of a particular design can provide evaluation amenable measurement signals if the load cells are placed under each rail in a rail pair against an underlying transverse beam, which is conveniently shaped as a cross-tie or sleeper, the rails being fastened in conventional fashion to the transverse beam. The latter can take the form of an ordinary cross-tie or sleeper in the rail system although of course a transverse beam specifically configured for load cell installation can be used. In the latter case, this special transverse beam advantageously replaces an ordinary cross-tie or sleeper.

The load cell is of a type having a substantial load receiving surface and an insubstantial height and is substantially insensitive to lateral load. Preferably, a pressure detecting fluid is disposed in the form of a thin layer between two steel plates which are best circular.

The load cells are advantageously of the type described in EP 0 342 305 B1 to which reference is made in relation to the details of a preferred load cell.

In accordance with the invention, means are further provided to controllably pre-bias the load cells. Such means can comprise an elastically deformable unit placed between the respective load cell and the underlying transverse beam. The unit can advantageously be fluid pressure controlled, although the man skilled in the art will appreciate that it is possible to use other arrangements.

Controllable pre-biasing is advantageous from several aspects. Firstly, it enables compensating for load-relief rail heaving effects in connection with the passage of wheel pairs onto and away from the device. It is a matter of negotiating a "seesaw" effect which has proven to arise during wheel transit. Specifically, the wheel presses the rail downwardly so that in return it heaves upwardly somewhat a little further along in the direction of movement.

The pre-biasing of the invention results in better definition of the output signal from the load cell.

Secondly, selective pre-biasing enables calibration of the respective load cells in connection with installation.

Thirdly, it enables selective readjustment of the cells as needed.

The load cells are advantageously arranged in a mounting plate which is simultaneously a rail anchor plate. In this regard, the mounting plate can incorporate, or be arranged to accept, the abovementioned pre-bias unit.

As will be appreciated without further elaboration, the above discussed parts of the weighing device can be installed particularly easily and without significant disturbance to the rail system. In practice, installation can be regarded as an exchange of a cross-tie or sleeper.

Naturally, it also becomes possible to easily move the transverse beam arrangement with the load cells from one location to another.

The output signals from the load cells are input to evaluation means which can measure both the accumulated total weight and the load distribution between right and left sides. The evaluation is preferably effected in accordance with the principles described in WO-A-92/21009 (our Swedish patent application no. 9101569-3), relating to a method for determining load measurements, to which reference is made for further details.

It will be appreciated that it is possible to set up more than one transverse beam arrangement, for instance three parallel spaced transverse beam-load cell arrangements connected to said evaluation means, the distance between the two outer arrangements conveniently exceeding the bogie inter-axle distance. The three arrangements can each constitute an ordinary cross-tie or sleeper and be disposed with an ordinary cross-tie or sleeper interposed between the first and second, and second and third arrangements, respectively. In this embodiment, the weighing device can also be employed to advantage in static weighing.

An embodiment with several transverse beam-load cell arrangements means that the measurement span is extended which in turn means that deviations in the roundness of the wheels will produce detectable measurement signal variations. In other words, it also becomes possible to detect wheel faults, such as "flat wheels" and eccentricity, using the device of the invention.

The invention will now be described in greater detail via an exemplary embodiment and with reference to the accompanying drawings.

### Brief Description of the Drawings

Fig. 1 is a very schematic sectional view which illustrates the fundamental set-up of an embodiment of the device of the invention.

Fig. 2 is an enlarged partial sectional view which illustrates the arrangement of a load cell in the device of Fig. 1.

Fig. 3 is a schematic view from above of a stretch of rail system illustrating the arrangement of a second embodiment of a weighing device in accordance with the invention.

### Description of the Exemplary Embodiments

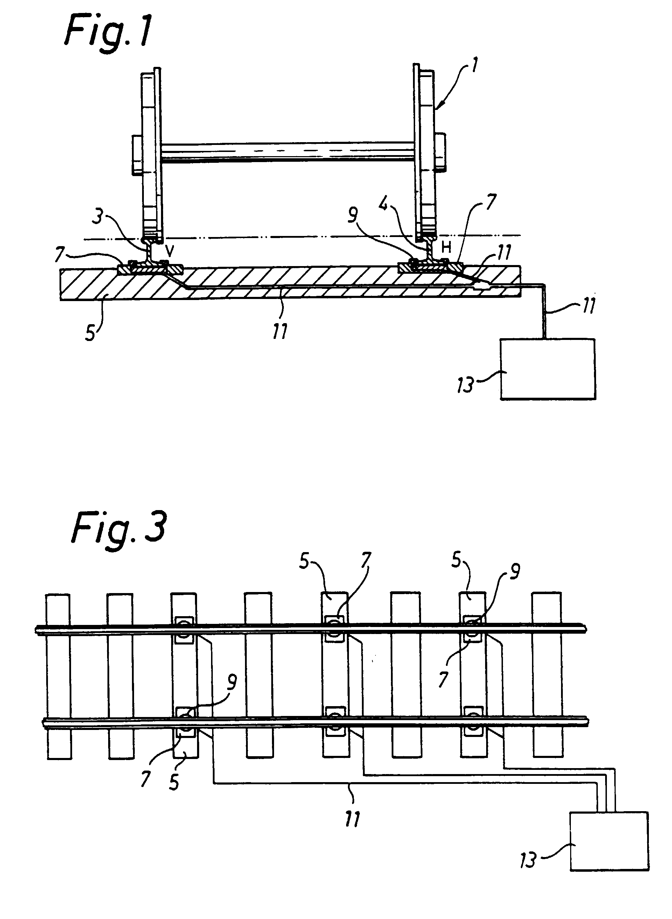

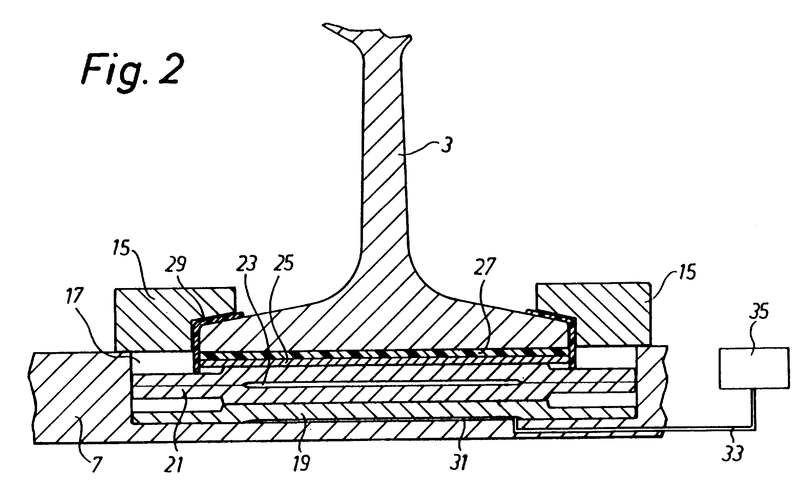

Fig. 1 depicts the manner in which a wheel pair 1 of a rail vehicle ride on two rails 3, 4 which are fastened to a transversely extending cross-tie 5 via anchor plates 7 mounted fast in the cross-tie. A pre-biased load cell unit is located between each of the respective rails and anchor plates, as shown in greater detail in Fig. 2. The load cell units 9 are connected via leads 11 to an evaluation unit 13 of electronic construction, located adjacent the rail system.

As is clear from Fig. 2, rail 3 is fastened to anchor plate 7 via rail fastener 15. Anchor plate 7 has an upwardly open cylindrical recess 17 of circular section, at the bottom of which a pre-bias unit 19 is secured. A cylindrical load cell 21 of circular section is movably disposed on top of the pre-bias unit 19. The load cell has a lower and an upper thin plate member with an intermediately disposed thin fluid layer 23 for pressure sensing. The output signal lead 11 connected to the load cell is not depicted but, bearing in mind its application, incorporates robust cabling, as will be readily apparent to the skilled artisan.

The rail 3 is supported, movably and elastically dampened, on the load cell 21 via a sheet metal disk 25 and a rubber disk 27. An electrically insulting intermediate layer 29 is located between the rail 3 and its fastener 15.

The pre-bias unit 19, in principle, comprises an upper, load cell supporting plate member which is sealed relative to the bottom of the recess so as to enclose a small volume of pressure fluid 31. This is in fluid communication with a controllable fluid pressure source 35 via conduit 33. As will be readily apparent, a change in this fluid pressure will mean a change in the pressure exerted by the pre-bias unit 19 from below against the overlying load cell.

In Fig. 3, an embodiment with three crossbeam-load cell arrangements in parallel disposition is illustrated connected cumulatively to the common evaluation unit 13. These crossbeam-load cell arrangements are set up as ordinary cross-ties in the rail system and are mutually separated by an intermediate ordinary cross-tie. In this fashion, the distance between the two outer arrangements becomes somewhat larger than the normal inter-axle distance in a bogie whose weight can thereby be simply measured.

## Claims

1. A weighing device for rail mounted vehicles, in particular goods wagons, comprising
a transverse beam (5) formed as a cross-tie or sleeper which provides the underlying support for a rail pair (3, 4) fastened to the transverse beam,
a load cell (9,21) for each rail, the respective load cells being placed between the associated rail (3, 4) and the transverse beam (5) and being of a type which has a substantial load receiving surface and an insubstantial height and is lateral load insensitive, the load cells preferably being of the sort which has a pressure detecting fluid disposed in the form of a thin layer (13) between two parallel plates,
characterized by further comprising
means (19, 31, 33, 35) to controllably pre-bias the load cells in order to compensate for loading fluctuations in connection with the passage of wheel pairs (1) onto and away from the device, and for calibration and readjustment, and
means (13) for evaluating the output signals of the load cells.

2. A device according to claim 1, characterized in that the respective load cells (9,21) are arranged in a mounting plate (7) which is simultaneously a rail anchor plate.

3. A device according to claim 1 or 2, characterized in that said means (19, 31, 33, 35) to controllably pre-bias the load cells are disposed between the load cells (9,21) and the transverse beam (5).

4. A device according to any one of the preceding claims, characterized in that said means (19, 31 33, 35) to controllably pre-bias the load cells (9,21) are fluid pressure controlled.

5. A device according to any one of the preceding claims, characterized in that the transverse beam (5) constitutes an ordinary cross-tie or sleeper in the rail system.

6. A device according to any one of the preceding claims, characterized in that the rails (3, 4) are supported, movably and elastically dampened, on the load cells.

7. A device according to any one of the preceding claims, characterized in that the load cells (9,21) have a circular configuration with a load receiving surface diameter to height ratio of at least about 5.

8. A device according to any one of the preceding claims, characterized by comprising three parallel, spaced transverse beam-load cell arrangements (5, 7, 9) connected to said evaluation means (13), the distance between the two outer arrangements exceeding the interaxle distance of a bogie.

9. A device according claim 8, characterized in that the three arrangements (5, 7, 9) each constitute an ordinary cross-tie or sleeper and are disposed with an ordinary cross-tie or sleeper interposed between the first and second arrangements and between the second and third arrangements.

## Patentansprüche

1. Wägevorrichtung für Schienenfahrzeuge, insbesondere für Güterwagen mit
einem Querbalken (5), der als Eisenbahnschwelle oder Schwelle ausgebildet ist, der als darunterliegende Lagerung bzw. Unterlage fiir ein Paar Schienen (3, 4) dient, welche an den Querbalken befestigt sind,
einer Lastzelle bzw. Druckmeßeinrichtung (9, 21) für jede Schiene, wobei die jeweiligen Druckmeßeinrichtungen zwischen der betreffenden Schiene (3, 4) und dem Querbalken (5) angeordnet und von einer Art sind, die eine erheblich lastaufnehmende Oberfläche und eine unerhebliche Höhe aufweisen und für seitliche Lasten unempfindlich sind, wobei die Druckmeßeinrichtungen bevorzugt von der Art sind, daß sie ein druckerfassendes Fluid aufweisen, das in Form einer dünnen Schicht (13) zwischen zwei parallelen Platten angeordnet ist,
dadurch gekennzeichnet,
daß die Vorrichtung weiterhin Einrichtungen (19, 31, 33, 35) zur steuerbaren Voreinstellung bzw. Vorspannung der Druckmeßeinrichtungen, um Lastschwankungen in Verbindung mit dem Überfahren der Räderpaare (1) zu und von der Vorrichtung zu kompensieren, und zum Eichen und zur Neujustierung, und
eine Einrichtung (13) zur Bewertung der Ausgangssignale der Druckmeßeinrichtungen aufweist.

2. Eine Vorrichtung nach Anspruch 1, dadurch gekennzeichnet, daß die jeweiligen Druckmeßeinrichtungen (9, 21) in einer Unterlagsplatte (7) angeordnet sind, die gleichzeitig eine Schienenankerplatte ist.

3. Eine Vorrichtung nach Anspruch 1 oder 2, dadurch gekennzeichnet, daß die Einrichtung (19, 31, 33, 35) zur steuerbaren Voreinstellung der Druckmeßeinrichtungen zwischen den Druckmeßeinrichtungen (9, 21) und dem Querbalken (5) angeordnet sind.

4. Vorrichtung nach einem der vorhergehenden Ansprüche, dadurch gekennzeichnet, daß die Einrichtungen (19, 31, 33, 35) zur steuerbaren Voreinstellung der Druckmeßeinrichtungen (9, 21) fluiddruckgesteuert sind.

5. Vorrichtung nach einem der vorhergehenden Ansprüche, dadurch gekennzeichnet, daß sich der Querbalken (5) aus einer gewöhnlichen Eisenbahnschwelle oder einer Schwelle im Schienensystem bildet.

6. Vorrichtung nach einem der vorhergehenden Ansprüche, dadurch gekennzeichnet, daß die Schienen (3, 4) auf den Druckmeßeinrichtungen beweglich und elastisch gedämpft gelagert sind.

7. Vorrichtung nach einem der vorhergehenden Ansprüche, dadurch gekennzeichnet, daß die Druckmeßeinrichtungen (9, 21) eine Kreisform mit einem Verhältnis des Durchmessers einer lastaufnehmenden Oberfläche zur Höhe von zumindest etwa 5 aufweisen.

8. Vorrichtung nach einem der vorhergehenden Ansprüche, gekennzeichnet durch drei parallele voneinander entfernte Querbalken-Druckmeßeinrichtungsanordnungen (5, 7, 9), die mit der Bewertungseinrichtung (13) verbunden sind, wobei die Entfernung zwischen den beiden äußeren Anordnungen den Achsenabstand eines Fahrgestells übertrifft.

9. Vorrichtung nach Anspruch 8, gekennzeichnet durch drei Anordnungen (5, 7, 9), die jeweils eine gewöhnliche Eisenbahnschwelle oder Schwelle bilden und mit einer gewöhnlichen Eisenbahnschwelle oder Schwelle angeordnet sind, die zwischen der ersten und der zweiten Anordnung und zwischen der zweiten und der dritten Anordnung liegen.

## Revendications

1. Un dispositif de pesage pour des véhicules montés sur rails, en particulier des wagons à marchandises, comprenant
une poutre transversale (5) réalisée sous la forme d'une entretoise de contre-rail ou d'une traverse, qui constitue le support sous-jacent d'une paire de rails (3, 4) fixée à la poutre transversale,
une jauge dynamométrique (9, 21) pour chaque rail, les jauges dynamométriques respectives étant placées entre le rail (3, 4) associé et la poutre transversale (5) et étant d'un type qui présente une surface de réception de charge importante et une hauteur négligeable et qui est insensible à une charge latérale, les jauges dynamométriques étant de préférence du type ayant un fluide de détection de pression se présentant sous la forme d'une mince couche (13) entre deux plaques parallèles,
caractérisé par le fait qu'il comprend en outre
des moyens (19, 31, 33, 35) pour pré-charger, de façon réglable, les jauges dynamométriques, de manière à compenser les fluctuations de charge, en liaison avec le passage des paires de roues (1) sur et hors du dispositif, et pour assurer l'étalonnage et le réajustement, et,
des moyens (13) pour évaluer les signaux de sortie des jauges dynamométriques.

2. Un dispositif selon la revendication 1, caractérisé en ce que les jauges dynamométriques (9, 21) respectives sont disposées dans une plaque de montage (7) faisant simultanément office de plaque d'ancrage de rails.

3. Un dispositif selon la revendication 1 ou 2, caractérisé en ce que lesdits moyens (19, 31, 33, 35), prévus pour pré-charger de façon réglable les jauges dynamométriques, sont placés entre les jauges dynamométriques (9, 21) et la poutre transversale (5).

4. Un dispositif selon l'une quelconque des revendications précédentes, caractérisé en ce que lesdits moyens (19, 31, 33, 35) prévus pour pré-charger, de façon réglable, les jauges dynamométriques (9, 21) sont commandés par une pression de fluide.

5. Un dispositif selon l'une quelconque des revendications précédentes, caractérisé en ce que la poutre transversale (5) constitue une entretoise de contre-rail ou une traverse ordinaire dans le système de rails.

6. Un dispositif selon l'une quelconque des revendications précédentes, caractérisé en ce que les rails (3, 4) sont supportés, en étant amortis avec une possibilité de déplacement et de façon élastique, sur les jauges dynamométriques.

7. Un dispositif selon l'une quelconque des revendications précédentes, caractérisé en ce que les jauges dynamométriques(9, 21) ont une configuration circulaire, avec un rapport du diamètre de la surface recevant la charge à la hauteur d'au moins 5 environ.

8. Un dispositif selon l'une quelconque des revendications précédentes, caractérisé par le fait qu'il comprend trois ensembles jauge dynamométrique-poutre transversale (5, 7, 9), espacés, parallèles, connectés auxdits moyens d'évaluation (13), la distance entre les deux ensembles extérieurs étant supérieure à la distance entre essieux d'un bogie.

9. Un dispositif selon la revendication 8, caractérisé en ce que les trois ensembles (5, 7, 9) constituent chacun une entretoise de contre-rail ou traverse ordinaire et sont disposés avec une entretoise de contre-rail ou traverse ordinaire interposée entre les premier et deuxième ensembles et entre les deuxième et troisième ensembles.
